(19) Europäisches Patentamt / European Patent Office / Office européen des brevets

(11) **EP 2 904 123 B1**

(12) **FASCICULE DE BREVET EUROPEEN**

(45) Date de publication et mention
de la délivrance du brevet:
**13.01.2021 Bulletin 2021/02**

(21) Numéro de dépôt: **13782782.0**

(22) Date de dépôt: **02.10.2013**

(51) Int Cl.:
*C21D 1/62* *(2006.01)*    *F27D 15/02* *(2006.01)*
*C04B 35/01* *(2006.01)*    *C21D 9/00* *(2006.01)*
*H01M 4/04* *(2006.01)*

(86) Numéro de dépôt international:
**PCT/FR2013/052345**

(87) Numéro de publication internationale:
**WO 2014/053773 (10.04.2014 Gazette 2014/15)**

(54) **DISPOSITIF DE TRAITEMENT THERMIQUE POUR MATÉRIAU EN POUDRE ET PROCÉDÉ DE TRAITEMENT THERMIQUE CORRESPONDANT**

WÄRMEBEHANDLUNGSVORRICHTUNG FÜR EIN PULVERFÖRMIGES MATERIAL UND ENTSPRECHENDES WÄRMEBEHANDLUNGSVERFAHREN

HEAT TREATMENT DEVICE FOR MATERIAL IN POWDER FORM AND CORRESPONDING HEAT TREATMENT METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.10.2012 FR 1259411**

(43) Date de publication de la demande:
**12.08.2015 Bulletin 2015/33**

(73) Titulaire: **Renault S.A.S.**
**92100 Boulogne-Billancourt (FR)**

(72) Inventeurs:
• **REY, Marlène**
**F-38113 Veurey-Voroize (FR)**
• **DESBOIS, Philippe**
**F-38490 Saint-Andre-le-Gaz (FR)**
• **HAON, Cédric**
**F-38000 Grenoble (FR)**
• **LAUNOIS, Sébastien**
**F-38100 Grenoble (FR)**

(56) Documents cités:
DE-A1- 19 827 804     US-A- 3 003 757
US-A1- 2005 069 772

**Description**

La présente invention concerne les dispositifs de traitement thermique, et plus particulièrement les dispositifs de traitement thermique pour matériaux en poudre.

Il existe deux grandes applications pour les dispositifs de traitement thermique : la trempe de métaux et la trempe de la coke.

Dans le cas de la trempe de métaux, le métal en fusion peut être soit directement plongé dans un milieu liquide froid ou sur une surface refroidie. Dans le cas d'une poudre, elle peut être mise dans un contenant, en acier le plus souvent, et transférée, par exemple avec un convoyeur, d'une zone dite chaude à une zone dite froide (four à passage).

Le document DE19827804 divulgue un dispositif de traitement thermique de produits en vrac, comprenant un four de traitement thermique et un bac de trempe à l'huile, le four étant monté de manière mobile afin de permettre de transférer le contenu du four vers le bac de trempe.

Cependant, la chute de certaines poudres dans le milieu liquide froid peut entraîner des projections de poudre dans l'atmosphère (par évaporation du liquide), conduisant à des risques de sécurité, à un rendement plus faible et à une inhomogénéité dans la qualité du produit obtenu. Concernant les fours à passage, l'utilisation d'un contenant métallique (acier, alliage à base de nickel, etc) pendant l'étape d'augmentation de la température, peut provoquer des réactions chimiques entre la poudre et le matériau du contenant, conduisant ainsi à des impuretés dans le produit obtenu qui sont néfastes pour certaines propriétés recherchées telles que les performances électrochimiques. Un matériau inerte vis-à-vis des poudres est l'alumine, mais l'alumine ne résiste pas aux chocs thermiques et se casse donc lors d'une trempe. Par ailleurs, il est parfois nécessaire d'obtenir un refroidissement brutal de la poudre et non un simple refroidissement rapide comme celui obtenu avec les fours à passage.

Dans le cas de la trempe de la coke, qui est une poudre, celle-ci est refroidie en sortie de four, par une chute durant laquelle ont lieu des échanges thermiques avec l'air (« dry process ») et/ou avec de l'eau (« wet process »). Cependant, un tel procédé nécessite des installations importantes et encombrantes inadaptées à la trempe de quantités limitées de matériaux en poudre.

La présente invention a pour objet de résoudre les problèmes techniques énoncés précédemment. En particulier l'invention a pour but de proposer un dispositif de traitement thermique, et le procédé correspondant, permettant de réaliser simplement et en sécurité une trempe de matériaux sous forme de poudre, tout en limitant la présence d'impuretés dans le produit obtenu.

Selon un aspect de l'invention, il est proposé un dispositif de traitement thermique pour matériau en poudre, selon la revendication 1.

Ainsi, grâce à l'utilisation d'une pluralité d'éléments solides (par exemple des billes) au lieu d'un liquide, il est possible de réaliser une trempe dans un récipient pouvant présenter des dimensions réduites, tout en limitant les projections et les impuretés dans le produit obtenu. En particulier, l'utilisation d'une pluralité d'éléments solides permet de refroidir les poudres sans former de phase gazeuse (à l'origine des projections dans le cas des trempes dans un liquide). Les éléments solides sont aptes à supporter des écarts de température supérieurs à 1000°C.

Selon l'invention, les éléments solides sont montés libres dans le récipient. Autrement dit, les éléments solides ne sont pas fixés au récipient.

Préférentiellement, les éléments solides sont préalablement refroidis. Ils peuvent ainsi présenter une température inférieure à -10°C, plus préférentiellement inférieure à -100°C, et encore plus préférentiellement inférieure à -150°C. Les éléments solides peuvent être par exemple refroidis par de l'azote liquide dont le point d'ébullition est proche de -200°C.

Par pluralité, on entend, n éléments solides, n étant compris entre 100 et 10 000. Les éléments solides peuvent être identiques ou différents.

La plus grande dimension des éléments solides peut être inférieure à 20cm, de préférence inférieure à 10cm, et encore plus préférentiellement inférieure à 3cm. En particulier, dans le cas d'éléments solides sous forme de billes, le diamètre des billes peut être compris entre 0,1 cm et 3cm, typiquement entre 0,5cm et 3cm. Une taille réduite permet notamment d'augmenter la surface de contact entre les éléments solides et la poudre, et donc d'augmenter l'efficacité de la trempe.

Ainsi, afin de favoriser la mise en contact entre les éléments solides et la poudre, il est préférable d'avoir un ratio volume des billes sur volume de la poudre compris entre 30 et 1000, de préférence entre 200 et 700.

Préférentiellement, le récipient est apte à être soumis à un mouvement d'agitation. Le mouvement d'agitation peut être un mouvement de rotation ou un mouvement de vibration. Ainsi, on augmente le nombre d'éléments solides susceptibles de venir en contact avec le matériau en poudre à tremper, et donc la surface de refroidissement des éléments solides du bac de trempe.

Préférentiellement, le bac de trempe comprend également un moyen d'entrainement en rotation du récipient ou un moyen vibrant. Le récipient peut être de forme cylindrique et le moyen d'entrainement en rotation peut comporter deux rouleaux reliés à un moteur d'entrainement, sur lesquels est monté le récipient. Le moyen d'entrainement en rotation permet ainsi à la fois d'agir comme un support et moyen de rotation du récipient.

Préférentiellement, le moyen d'entrainement en rotation est apte à faire tourner le récipient autour d'un axe présentant un angle supérieur à 5° avec la direction verticale, par exemple compris entre 5° et 70°, de préférence entre 20° et 60°, et encore plus préférentiellement entre 40° et 50°. Le moyen d'entrainement en rotation permet d'homogénéiser la température des éléments solides contenus dans le récipient, notamment en les mélangeant, et permet aussi de désagglomérer la poudre refroidie, tout en réalisant une dispersion optimisée de la poudre dans l'ensemble du récipient.

Préférentiellement, le four de traitement thermique est un four tubulaire présentant un axe principal horizontal, le four étant monté sur un bâti basculant apte à incliner l'axe du four de manière à permettre le transfert du contenu du four dans le bac de trempe par gravité.

De préférence, lors du transfert de la poudre dans le bac de trempe, aucun élément de transfert supplémentaire n'est prévu de manière à ce que la poudre ne rencontre pas d'élément solide autre que ceux prévus dans le récipient du bac de trempe. Autrement dit, le transfert du contenu du four dans le bac de trempe par gravité peut se faire de manière directe, sans élément de transfert supplémentaire disposé entre le four et le bac de trempe. La poudre peut ainsi tomber du four directement dans le bac de trempe.

Préférentiellement, la zone de chauffe du four de traitement thermique comprend un tube axial en alumine.

Préférentiellement, les éléments solides sont des billes, par exemple en acier.

L'invention concerne également, selon un autre aspect, un procédé de traitement thermique d'un oxyde lamellaire surlithié, par exemple un oxyde lamellaire de manganèse nickel magnésium surlithié, selon la revendication 8.

Plus particulièrement, selon le procédé, on refroidit le matériau en transférant celui-ci dans un bac de trempe tel que décrit précédemment.

Préférentiellement, on refroidit la pluralité d'éléments solides par contact avec de l'azote liquide. Par exemple, la pluralité d'éléments solides peut être préalablement refroidie en deux étapes, par mise en contact, deux fois successivement, avec de l'azote liquide.

Pour ce faire, les éléments solides peuvent être mis en contact avec l'azote liquide hors du récipient du bac de trempe, puis introduits dans le bac de trempe, préalablement à la trempe. Selon une alternative préférée, l'azote liquide est ajouté dans le récipient du bac de trempe, contenant déjà les éléments solides, et le récipient est mis en rotation de façon à favoriser l'homogénéisation de température de la pluralité d'éléments solides.

Bien entendu, avant la trempe, il est fait en sorte que l'azote liquide utilisé pour le refroidissement des éléments solides soit totalement évaporé du récipient du bac de trempe.

La quantité d'azote liquide à utiliser est aisément déterminée par l'homme du métier au regard des dimensions du récipient et des éléments solides.

Préférentiellement, on entraîne par rotation dans un récipient ou on agite par vibration les éléments solides pendant la trempe du matériau en poudre.

Préférentiellement, on sépare le matériau refroidi des éléments solides par tamisage. Dans ce cas, on prévoit que la poudre présente une taille de grain très inférieure à la taille des éléments solides. Usuellement, la poudre présente une taille de grain comprise entre 10nm et 500$\mu$m, de préférence entre 10nm et 100$\mu$m.

L'oxyde lamellaire surlithié de type oxyde de manganèse, nickel et magnésium surlithié peut être utilisé en tant que matériau d'électrode positive pour batterie lithium-ion, et plus particulièrement pour des applications demandant de hautes énergies comme les véhicules électriques.

Selon un mode de réalisation de l'invention, l'oxyde de type lamellaire correspond à la formule générale suivante :

$$x Li_2MnO_3(1-x)LiM^1_aM^2_bM^3_cO_2$$

où :

- 0<x<1
- $M^1$ est un élément chimique choisi parmi un premier groupe constitué par Mn, Ni, Co, Fe Ti, Cr, V et Cu,
- $M^3$ est au moins un élément chimique choisi parmi un second groupe constitué par Mg, Zn, Al, Na, Ca, Li, K, Sc, B, C, Si, P et S,
- $M^2$ est un élément chimique choisi parmi le premier groupe et le second groupe et il est différent de $M^1$ et de $M^3$,
- a+b+c=1, avec a, b et c non-nuls.

Selon un mode de réalisation, x est égal à 0,75.

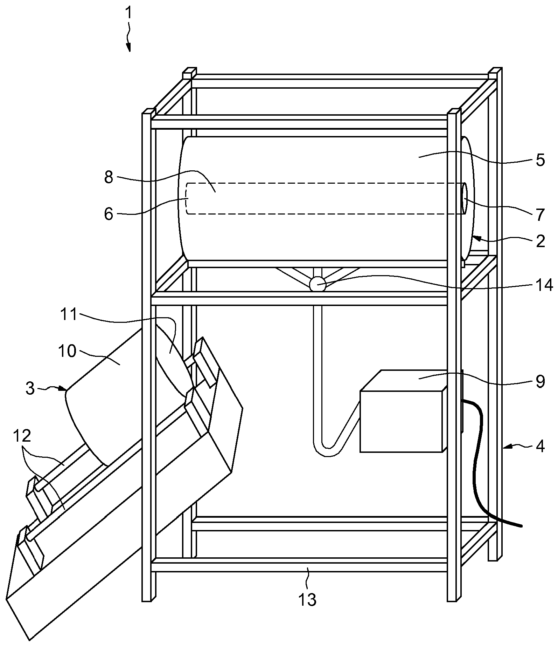

D'autres avantages et caractéristiques de l'invention apparaîtront à l'examen de la description détaillée d'un mode de réalisation de l'invention nullement limitatif, illustré par la figure annexée représentant, de manière schématique, un dispositif de traitement thermique selon l'invention.

Sur la figure annexée est représenté un dispositif de traitement thermique 1. Le dispositif 1 comprend notamment un four de traitement thermique 2, un bac de trempe 3 et un moyen de transfert 4.

Le four de traitement thermique 2 est par exemple un four tubulaire classique : il peut comprendre un corps cylindrique 5 chauffant, avec un axe disposé horizontalement, une paroi latérale cylindrique et deux faces d'extrémité. Le corps cylindrique 5 comprend également un évidement axial 6, à proximité de l'axe du corps cylindrique 5. L'évidement axial 6 peut être par exemple traversant, avec une ouverture 7 sur chaque face d'extrémité du corps cylindrique 5. Pendant l'étape de chauffe, les ouvertures 7 sont obturées. A l'intérieur de l'évidement 6 est positionné le produit à chauffer ou un contenant pour le produit à chauffer. Dans le cas présent, le four de traitement thermique 2 comprend un tube d'alumine 8 comme contenant, afin d'éviter les réactions chimiques entre le matériau du contenant et les poudres durant l'étape d'augmentation de la température. Le tube d'alumine 8 est monté fixe dans le four de traitement thermique 2 afin d'éviter qu'il ne subisse également un choc thermique.

Enfin, le four de traitement thermique 2 comprend également une alimentation 9, par exemple électrique.

Le bac de trempe 3 comprend un récipient 10, par exemple avec une forme cylindrique, contenant une pluralité d'éléments solides (non représentés) à l'intérieur. Par exemple, le récipient 10 peut contenir des billes d'acier, de diamètre 1,2cm. Le récipient cylindrique 10 comprend une ouverture 11 au niveau de la face supérieure du cylindre afin de permettre aux poudres venant du four 2 de tomber à l'intérieur du récipient 10. Le bac de trempe 3 comprend également un moyen d'entrainement en rotation par exemple des barreaux 12 entraînés en rotation par des moyens motorisés (non représentés) et sur lesquels est posé le récipient 10. Les barreaux 12 permettent d'une part de faire tourner le récipient 10 avec les éléments solides à l'intérieur, et également de maintenir le récipient 10 incliné par rapport à la verticale. Par exemple, les barreaux 12 peuvent maintenir le récipient 10 avec un angle de 45° entre l'axe du récipient et la verticale.

Le dispositif de traitement thermique 1 comprend enfin le moyen de transfert 4 comportant un bâti 13 supportant le four de traitement thermique 2 et le bac de trempe 3. Plus précisément, le bâti 13 maintient le four de traitement thermique 2 à une hauteur supérieure à celle du bac de trempe 3, afin de permettre le transfert du contenu du four 2 au bac de trempe 3 par gravité. Ainsi, le four 2 est monté sur un axe 14 horizontal, perpendiculaire à l'axe du four de traitement thermique 2. L'axe 14 permet d'incliner (ou de basculer) l'axe du four de traitement thermique 2. Par ailleurs, le bac de trempe 3 est positionné à proximité du four de traitement thermique 2, et l'ouverture 11 est orientée de manière à ce que l'ouverture 7 de l'évidement 6 du four 2 vienne en regard de l'ouverture 11 lors du basculement du four 2 autour de l'axe 14.

En fonctionnement, le dispositif de traitement thermique 1 est préparé dans un premier temps : le mélange de précurseurs en poudre est introduit dans la zone de chauffe en alumine 8 placée à l'intérieur du four 2 en position horizontale, et on chauffe à la température adéquate pendant une durée appropriée au traitement thermique, par exemple 5 à 30 heures, en fonction du matériau à traiter thermiquement et conformément aux connaissances générales de l'homme du métier du domaine des poudres.

Puis, de l'azote liquide est versé dans le récipient 10 du bac de trempe 3 pour refroidir les billes qu'il contient. De l'azote liquide peut être versé deux fois successivement dans le récipient 10, et les barreaux 12 sont mis en rotation pour que les billes soient toutes refroidies de manière homogène à l'intérieur du récipient 10, jusqu'à consommation ou évaporation totale de l'azote liquide. Immédiatement après, le four 2 est basculé par le bâti en position inclinée de manière à faire venir l'ouverture 7 de l'évidement en regard de l'ouverture 11 du récipient 10. Sous l'effet de la gravité, la poudre glisse dans le bac de trempe 3 en rotation, dans lequel elle est refroidie par les billes. La poudre est ensuite séparée des billes par tamisage.

On obtient ainsi une trempe homogène de la poudre et une absence d'agglomération des particules de la poudre.

Un exemple d'application est décrit ci-après : l'exemple concerne le traitement thermique et la trempe d'un matériau en poudre pour électrode positive de batterie lithium-ion. Le matériau est un oxyde lamellaire surlithié de formule $0,75Li_2MnO_3 . 0,25LiNi_{0,9}Mn_{0,05}Mg_{0,05}O_2$.

Un mélange de précurseurs est choisi afin de former un carbonate mixte de lithium manganèse nickel et magnésium. Le mélange (environ 100 grammes) est introduit dans le tube en alumine du four tubulaire, pour être chauffé.

Le bac de trempe est rempli de 17 457g de billes d'acier 100C6 de diamètre 12mm, soit 2537 billes environ, remplissant environ un volume de 5 litres. Le ratio volumique des billes sur la poudre est d'environ 425. Le refroidissement des billes par l'azote liquide est effectué en deux fois : on introduit dans un premier temps 5 litres d'azote liquide et on met le récipient en rotation. L'opération est répétée deux fois à cinq minutes d'intervalle pour refroidir les billes à cœur.

A la fin de traitement thermique du mélange de précurseurs (température d'environ 1000°C pendant une durée comprise entre 10 heures et 24 heures), le four est basculé et la poudre glisse dans le bac de trempe pour subir la trempe. Le récipient 10 tourne à une vitesse comprise entre 15 et 30 tours/minute. La trempe dure environ 1 minute et la poudre peut être récupérée immédiatement, après avoir été séparée des billes par tamisage.

Le matériau obtenu est caractérisé par diffraction des rayons X. Il a ainsi été constaté qu'aucune phase spinelle n'est apparue pendant la phase de trempe, permettant ainsi d'obtenir un produit présentant des performances électrochimiques élevées.

Ainsi, grâce au bac de trempe décrit précédemment, il est possible d'effectuer, avec des installations réduites et sans projection dans l'atmosphère, une étape de trempe limitant l'apparition de phases cristallines supplémentaires sous forme d'impuretés dans le produit final obtenu.

**Revendications**

1. Dispositif de traitement thermique (1) pour matériau en poudre, comprenant :

    - un four de traitement thermique (2) présentant une zone de chauffe, et
- un bac de trempe (3),

**caractérisé en ce que** le bac de trempe (3) comporte un récipient (10) au moins partiellement rempli de n pluralité d'éléments solides, n étant compris entre 100 et 100 000, et **en ce que** le four de traitement thermique est monté de manière mobile afin de permettre de transférer le contenu du four de traitement thermique (2) vers le bac de trempe (3).

2. Dispositif de traitement thermique (1) selon la revendication 1 comportant également un moyen d'entraînement en rotation (12) du récipient (10) ou un moyen vibrant.

3. Dispositif de traitement thermique (1) selon la revendication 2 dans lequel le récipient (10) est de forme cylindrique et dans lequel le moyen d'entrainement en rotation (12) comporte deux rouleaux reliés à un moteur d'entrainement, sur lesquels est monté le récipient (10).

4. Dispositif de traitement thermique (1) selon la revendication 2 ou 3 dans lequel le moyen d'entrainement en rotation (12) est apte à faire tourner le récipient (10) du bac de trempe (3) autour d'un axe présentant un angle supérieur à 5° avec la direction verticale.

5. Dispositif de traitement thermique (1) selon l'une des revendications 1 à 4 dans lequel le four de traitement thermique (2) est un four tubulaire présentant un axe principal horizontal, le four étant monté sur un bâti basculant apte à incliner l'axe du four de manière à permettre le transfert du contenu du four (2) dans le bac de trempe (3) par gravité.

6. Dispositif de traitement thermique (1) selon l'une des revendications 1 à 5 dans lequel la zone de chauffe du four de traitement thermique (2) comprend un tube axial en alumine (8).

7. Dispositif de traitement thermique (1) selon l'une des revendications 1 à 6 dans lequel les éléments solides sont des billes, par exemple en acier.

8. Procédé de traitement thermique d'un oxyde lamellaire surlithié, par exemple un oxyde lamellaire de manganèse nickel magnésium surlithié, dans lequel :

- on mélange des précurseurs en poudre pour former par exemple un carbonate mixte de lithium manganèse nickel magnésium,
- on chauffe le matériau en le maintenant à une température de traitement pendant une durée déterminée,
- on refroidit le mélange par contact avec n éléments solides préalablement refroidis, n étant compris entre 100 et 100 000.

9. Procédé de traitement thermique selon la revendication 8 dans lequel on refroidit la pluralité d'éléments solides par contact avec de l'azote liquide.

10. Procédé de traitement thermique selon la revendication 8 ou 9 dans lequel on entraîne par rotation dans un récipient ou on agite par vibration les éléments solides pendant la trempe du mélange.

11. Procédé de traitement thermique selon l'une des revendications 8 à 10 dans lequel on sépare le mélange refroidi des éléments solides par tamisage.


**Patentansprüche**

1. Wärmebehandlungsvorrichtung (1) für ein pulverförmiges Material, welche umfasst:

- einen Wärmebehandlungsofen (2), der eine Erwärmungszone aufweist, und
- einen Abschreckbehälter (3),

**dadurch gekennzeichnet, dass** der Abschreckbehälter (3) ein Gefäß (10) aufweist, das wenigstens teilweise mit einer Vielzahl von n festen Elementen gefüllt ist, wobei n zwischen 100 und 100 000 liegt, und dadurch, dass der Wärmebehandlungsofen beweglich angebracht ist, um zu ermöglichen, den Inhalt des Wärmebehandlungsofens (2) zum Abschreckbehälter (3) zu überführen.

2. Wärmebehandlungsvorrichtung (1) nach Anspruch 1, welche außerdem ein Mittel zum Drehantrieb (12) des Gefäßes (10) oder ein Rüttelmittel aufweist.

3. Wärmebehandlungsvorrichtung (1) nach Anspruch 2, wobei das Gefäß (10) von zylindrischer Form ist und wobei das Mittel zum Drehantrieb (12) zwei mit einem Antriebsmotor verbundene Walzen aufweist, auf denen das Gefäß (10) angebracht ist.

4. Wärmebehandlungsvorrichtung (1) nach Anspruch 2 oder 3, wobei das Mittel zum Drehantrieb (12) geeignet ist, eine Drehung des Gefäßes (10) des Abschreckbehälters (3) um eine Achse zu bewirken, die mit der vertikalen Richtung einen Winkel bildet, der größer als 5° ist.

5. Wärmebehandlungsvorrichtung (1) nach einem der Ansprüche 1 bis 4, wobei der Wärmebehandlungsofen (2) ein Rohrofen ist, der eine horizontale Hauptachse aufweist, wobei der Ofen auf einem kippbaren Gestell angebracht ist, das geeignet ist, die Achse des Ofens zu neigen, um so die Überführung des Inhalts des Ofens (2) in den Abschreckbehälter (3) durch Schwerkraft zu ermöglichen.

**6.** Wärmebehandlungsvorrichtung (1) nach einem der Ansprüche 1 bis 5, wobei die Erwärmungszone des Wärmebehandlungsofens (2) ein axiales Rohr aus Aluminiumoxid (8) aufweist.

**7.** Wärmebehandlungsvorrichtung (1) nach einem der Ansprüche 1 bis 6, wobei die festen Elemente Kugeln sind, zum Beispiel aus Stahl.

**8.** Verfahren zur Wärmebehandlung eines überlithierten plättchenförmigen Oxids, zum Beispiel eines plättchenförmigen überlithierten Mangan-Nickel-Magnesium-Oxids, wobei:

- pulverförmige Precursoren gemischt werden, um zum Beispiel ein gemischtes Carbonat von Lithium-Mangan-Nickel-Magnesium zu bilden,
- das Material erwärmt wird, indem es während einer vorbestimmten Dauer auf einer Behandlungstemperatur gehalten wird,
- die Mischung durch Kontakt mit n zuvor gekühlten festen Elementen abgekühlt wird, wobei n zwischen 100 und 100 000 liegt.

**9.** Wärmebehandlungsverfahren nach Anspruch 8, wobei die Vielzahl von festen Elementen durch Kontakt mit flüssigem Stickstoff gekühlt wird.

**10.** Wärmebehandlungsverfahren nach Anspruch 8 oder 9, wobei die festen Elemente während der Abschreckung der Mischung durch Drehung in einem Gefäß mitgenommen oder durch Rütteln bewegt werden.

**11.** Wärmebehandlungsverfahren nach einem der Ansprüche 8 bis 10, wobei die abgekühlte Mischung von den festen Elementen durch Sieben getrennt wird.

**Claims**

**1.** Heat treatment device (1) for a material in powder form, comprising:

- a heat treatment furnace (2) having a heating zone, and
- a quenching tank (3),

**characterized in that** the quenching tank (3) comprises a container (10) at least partially filled with a plurality of n solid elements, n being between 100 and 100 000, and **in that** the heat treatment furnace is mounted so that it is mobile, so that the contents of the heat treatment furnace (2) can be transferred to the quenching tank (3) .

**2.** Heat treatment device (1) according to Claim 1, also comprising a rotational-drive means (12) for rotating the container (10) or a vibrating means.

**3.** Heat treatment device (1) according to Claim 2, in which the container (10) is of cylindrical shape and in which the rotational-drive means (12) comprises two rollers connected to a drive motor and on which the container (10) is mounted.

**4.** Heat treatment device (1) according to Claim 2 or 3, in which the rotational-drive means (12) is able to make the container (10) of the quenching tank (3) rotate about an axis that makes an angle of more than 5° with the vertical direction.

**5.** Heat treatment device (1) according to one of Claims 1 to 4, in which the heat treatment furnace (2) is a tube furnace having a horizontal main axis, the furnace being mounted on a pivoting stand able to incline the axis of the furnace so as to allow the contents of the furnace (2) to be transferred to the quenching tank (3) under gravity.

**6.** Heat treatment device (1) according to one of Claims 1 to 5, in which the heating zone of the heat treatment furnace (2) comprises an axial tube made of alumina (8).

**7.** Heat treatment device (1) according to one of Claims 1 to 6, in which the solid elements are balls, for example made of steel.

**8.** Heat treatment method for an over-lithiated layered oxide, for example an over-lithiated layered manganese nickel magnesium oxide, in which:

- precursors in powder form are mixed so as to form for example a mixed lithium manganese nickel magnesium carbonate,
- the material is heated, keeping it at a treatment temperature for a determined length of time,
- the mixture is cooled by contact with n previously cooled solid elements, n being between 100 and 100 000.

**9.** Heat treatment method according to Claim 8, in which the plurality of solid elements is cooled by contact with liquid nitrogen.

**10.** Heat treatment method according to Claim 8 or 9, in which the solid elements are moved around under the effect of rotation in a container or agitated by vibration while the mixture is being quenched.

**11.** Heat treatment method according to one of Claims 8 to 10, in which the cooled mixture is separated from the solid elements by screening.

## RÉFÉRENCES CITÉES DANS LA DESCRIPTION

**Documents brevets cités dans la description**

- DE 19827804